# EUROPÄISCHE PATENTANMELDUNG

(11) **EP 0 648 956 A1**
(43) Veröffentlichungstag der Anmeldung: **19.04.1995**
(21) Anmeldenummer: 94109455.9
(22) Anmeldetag: 18.06.1994
(51) Int. Cl.: F16F 15/131

(54) **Geteilte Schwungradvorrichtung mit Axiallagerung im Umfangbereich**

(30) Priorität: 15.10.1993 DE 4335207
(71) Anmelder: FICHTEL & SACHS AG, D-97424 Schweinfurt (DE)
(72) Erfinder: Schierling, Bernhard, Dipl.-Ing. (FH), D-97273 Kürnach (DE); Till, Ralf, Dipl.-Ing. (FH), D-97502 Euerbach (DE); Sudau, Jörg, Dipl.-Ing., D-97464 Niederwerrn (DE)

(57) **Zusammenfassung**

Eine geteilte Schwungradvorrichtung weist ein mit der Kurbelwelle (1) einer Brennkraftmaschine verbundenes, mit einer Axiallagerung (19,20) für eine Nabe (10) versehenes und im Umfangsbereich mit einem Radiallager (16) für die Nabe (10) ausgebildetes erstes Schwungrad (3) sowie ein synchron mit der Nabe (10) drehbares, gegenüber dem ersten Schwungrad (3) zu einer begrenzten Relativdrehung befähigtes zweites Schwungrad (12) auf. Bei dieser Schwungradvorrichtung ist das Axiallager (19,20) so anzuordnen, daß einerseits eine stets ausreichende Versorgung desselben mit Schmiermittel gewährleistet und andererseits eine optimale axiale Führung der Nabe (10) erzielbar ist. Zur Lösung dieser Aufgabe ist das Axiallager (19,20) mit beidseits der Nabe (10) bis an das Radiallager (16) heranreichenden Wegbegrenzungen für die Nabe (10) versehen.

## Beschreibung

Die Erfindung bezieht sich auf eine geteilte Schwungradvorrichtung gemäß dem Oberbegriff des Anspruchs 1.

Durch die EP 0 476 707 A1 ist eine geteilte Schwungradvorrichtung bekannt, bei der ein erstes Schwungrad mit der Kurbelwelle einer Brennkraftmaschine verbunden ist. Dieses Schwungrad weist in seinem Umfangsbereich einen seitlich überstehenden Ring auf, an dessen Innenseite ein Radiallager für eine Nabe ausgebildet ist, die gegenüber dem ersten Schwungrad eine begrenzte Relativdrehung ausführen kann und an einem zur Aufnahme einer Kupplungsscheibe bestimmten zweiten Schwungrad befestigt ist. Das erste Schwungrad trägt an seiner dem zweiten Schwungrad zugewandten Seite ein Abdeckblech, das ein erstes Axiallager für die Nabe trägt und als Verschluß für eine die Nabe umgebende, mit Fett gefüllte Kammer dient. Ein zweites Axiallager ist bei relativ dichter Anordnung an der Drehachse der Schwungräder an einem bis an das erste Schwungrad heranreichenden Vorsprung des zweiten Schwungrades ausgebildet.

Die Fettkammer dieser Schwungradvorrichtung ist derart gestaltet, daß das Radiallager über einen zwischen dem ersten Schwungrad und der Nabe verlaufenden Schmierkanal mit Fett versorgt wird. Räumlich getrennt von diesem Schmierkanal angeordnet ist dagegen die Versorgung der Axiallager in Frage gestellt, wovon insbesondere das zur Drehachse der Schwungräder nähere Lager betroffen ist, da das Fett unter dem Einfluß von Fliehkräften von der Drehachse nach außen gedrückt wird.

Als Folge ist ein erheblicher Verschleiß der Axiallager zu erwarten.

Bei der bekannten Schwungradvorrichtung sind beide Axiallager in einem zwischen der Drehachse der Schwungräder und dem Radiallager liegenden Bereich der Nabe angeordnet. Wegen des somit relativ geringen Abstandes der Axiallager zur Drehachse ist die Nabe nicht optimal gegen von der Kurbelwelle der Brennkraftmaschine eingeleitete Taumelbewegungen abstützbar.

Der Erfindung liegt die Aufgabe zugrunde, ein Axiallager so anzuordnen, daß einerseits eine stets ausreichende Versorgung desselben mit Schmiermittel gewährleistet und andererseits eine optimale axiale Führung der Nabe erzielbar ist.

Diese Aufgabe wird erfindungsgemäß durch den Kennzeichenteil des Anspruchs 1 gelöst. Durch Anordnung des Axiallagers angrenzend an das Radiallager wird erreicht, daß das Fett, das unter der Wirkung von Fliehkräften zum Radiallager als der Stelle befördert wird, die innerhalb des Fettraums den größten Abstand zur Drehachse der Schwungräder aufweist, nach Erreichen des Radiallagers auch in das Axiallager gelangt und dort für dessen Schmierung sorgt. Außerdem wird durch die beidseits der Nabe bis an das Radiallager heranreichenden Wegbegrenzungen des Axiallagers bewirkt, daß die Nabe in ihrem Umfangsbereich und damit in größtmöglichem Abstand von der Drehachse der Schwungräder geführt ist, so daß von der Kurbelwelle einer Brennkraftmaschine eingeleitete Taumelbewegungen mit geringeren Reaktionskräften übertragbar sind. Vorteilhafte Ausführungen einer derartigen geteilten Schwungradvorrichtung sind in den Ansprüchen 2 bis 4 angegeben.

In den Ansprüchen 5 und 6 sind besonders einfache Ausführungen des Axiallagers beschrieben, während den Ansprüchen 7 und 8 Ausführungen entnehmbar sind, bei denen die für die Axiallagerung der Nabe bestimmten Elemente zudem für deren Radial- - lagerung vorgesehen sind und demnach sowohl in axialer als auch in radialer Richtung eingeleitete Kräfte aufnehmen können.

In den Ansprüchen 9 bis 12 sind vorteilhafte Ausführungen der erfindungsgemäßen Lösung angegeben, bei denen über die Bemessung der Aussparungen oder der Abstände zwischen jeweils zwei Segmenten die Aufnahmefähigkeit des Axiallagers an Fett und damit das Laufverhalten der Nabe vorbestimmbar ist.

Der Erfindungsgegenstand ist anhand von in der Zeichnung dargestellten Ausführungsbeispielen näher erläutert. Es zeigt:
- Fig. 1: Eine geteilte Schwungradvorrichtung im Teillängsschnitt mit einem Axial- und einem Radiallager am ersten Schwungrad.
- Fig. 2: Die Schwungradvorrichtung in Vorderansicht, teilweise in Schnittdarstellung.
- Fig. 3a - e: weitere Ausführungen des Axial- und Radiallagers.

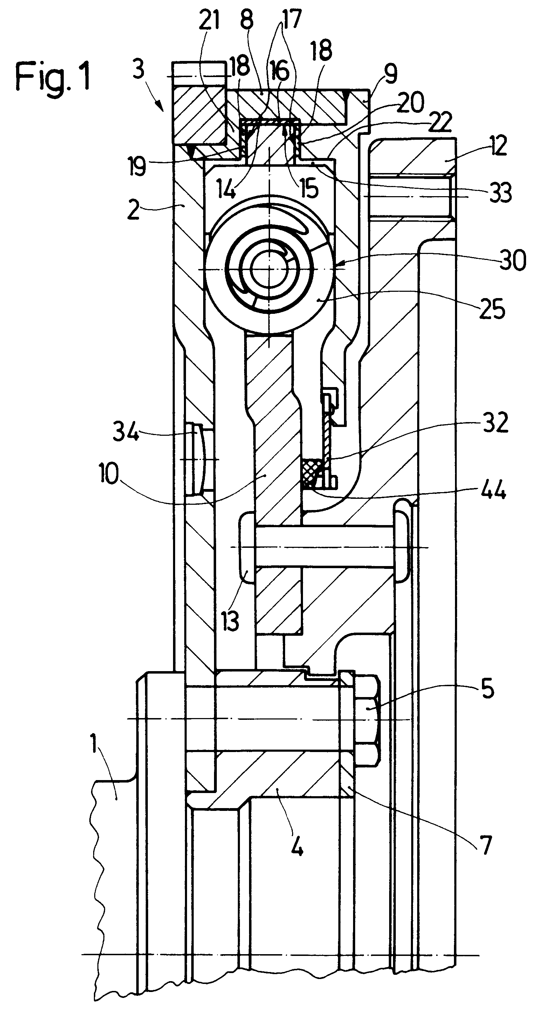

Fig. 1 zeigt den Teillängsschnitt durch eine geteilte Schwungradvorrichtung, wobei an der Kurbelwelle 1 eine Primärplatte 2 eines ersten Schwungrades 3 und ein Lagerflansch 4 angeschraubt sind. Zwischen dem letztgenannten und den Köpfen mehrerer am Umfang des Lagerflansches 4 verteilter Schrauben 5 ist eine Platte 7, die zur Verteilung der von den Schraubenköpfen eingeleiteten Kraft auf die Kontaktfläche des Lagerflansches 4 dient, angeordnet.
Die Primärplatte 2 des Schwungrades 3 trägt in ihrem Umfangsbereich einen ringförmigen Primärträger 8 S-förmigen Querschnitts, an dessen von der Primärplatte 2 abgewandten Ende eine Deckplatte 9 befestigt ist. In einem von der Primärplatte 2, dem Primärträger 8 und der Deckplatte 9 umschlossenen Raum 33 des ersten Schwungrades 3 ist eine Nabe 10 aufgenommen, die an einem auf dem Lagerflansch 4 drehbar angeordneten zweiten Schwungrad 12 mittels auf dem Umfang verteilten Nieten 13 befestigt ist. Die radiale Bemessung der Nabe 10 ist so gewählt, daß diese in ihrem Umfangsbereich in eine an der Innenseite des Primärträgers 8 ausgebildete Vertiefung 14 eingreift. Diese nimmt ein Radiallager 15 in Form eines der Kontur des Primärträgers 8 folgenden Ringes 16 und ein Axiallager 17 auf, das zu beiden Seiten der Nabe 10 mit jeweils einer Wegbegrenzung 18 für die Nabe 10 in Form jeweils einer Scheibe 19,20 ausgebildet ist. Die Scheibe (19) kommt seitlich an einem Steg 21 des Primärträgers 8 und die Scheibe 20 an einem Vorsprung 22 der Deckplatte 9 zur Anlage.

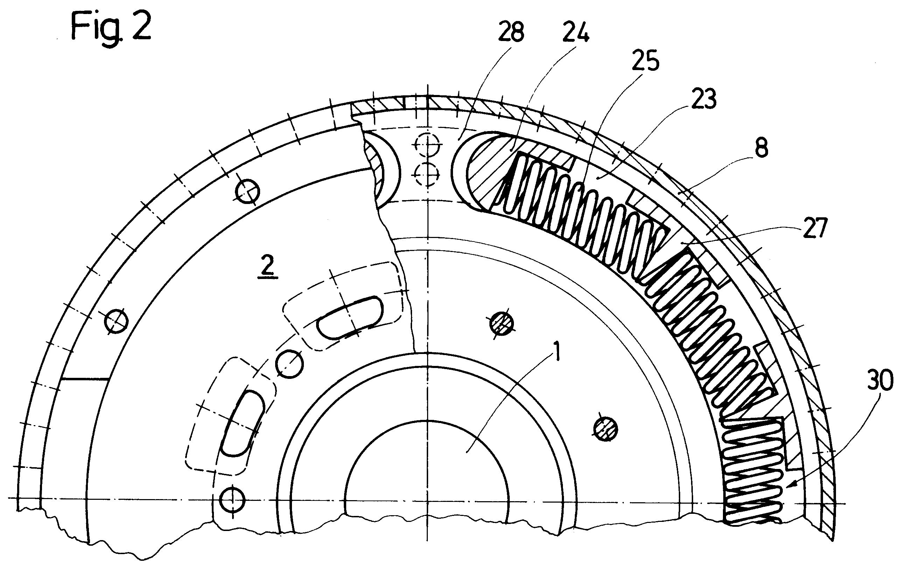

In der Nabe 10 sind halbkreisförmige Ausnehmungen 23 (Fig.2) ausgebildet, in denen Federteller 24 für Federn 25 sowie Gleitschuhe 27 für die letztgenannten angeordnet sind. Die Federteller 24 sind an Anschlägen 28 des ersten Schwungrades 3 in Anlage bringbar. Drehmomentänderungen an der Kurbelwelle 1 und somit am ersten Schwungrad 3 bewirken eine Verformung der Federn 25 unter Verschiebung der Gleitschuhe 27 innerhalb der jeweiligen Ausnehmung 23. Die Federn 25 sind ebenso wie diese umgebendes, bei Verformung der Federn 25 verdrängbares Fett Teil einer Torsionsdämpfung 30.

An dem den Drehachsen der Schwungräder 3,12 zugewandten Ende der Deckplatte 9 (fig.1) stützt sich eine mit der letzteren drehfeste, vorgespannte Scheibenfeder 32 ab, die mit ihrer entgegengesetzten Seite drehfest mit einer ringförmigen Dichtung 44 verbunden ist und diese gegen die Nabe 10 preßt. Hierdurch wird einerseits infolge des Reibschlusses die Drehbewegung der Nabe 10 bei Einleitung von Drehmomentschwankungen reduziert und damit eine restlose Ausnutzung des Federwegs der Federn 25 nach Möglichkeit verhindert und andererseits der die Nabe 10 umgebende Raum 33, der mit Fett gefüllt ist, gegen einen Austritt desselben abgedichtet. Zum Befüllen dieses Raumes ist in der Primärplatte 2 eine durch einen nicht gezeigten Stöpsel verschließbare Öffnung 34 vorgesehen.

Die Platte 7 am Lagerflansch 4 bildet durch gegenüber dem letztgenannten überstehende Enden eine axiale Notzentrierung für das zweite Schwungrad 12 für den Fall, daß sich dieses, beispielsweise bei Gewaltbruch der Nieten 13, in axialer Richtung vom Lagerflansch 4 lösen will. Das zweite Schwungrad 12 trägt in nicht dargestellter Weise sowohl das Kupplungsgehäuse als auch die dazugehörige Reibungskupplung mit einer Kupplungsscheibe. Gleiches gilt bezüglich der Notzentrierung in radialer Richtung zwischen dem Flansch 4 und dem Schwungrad 12.

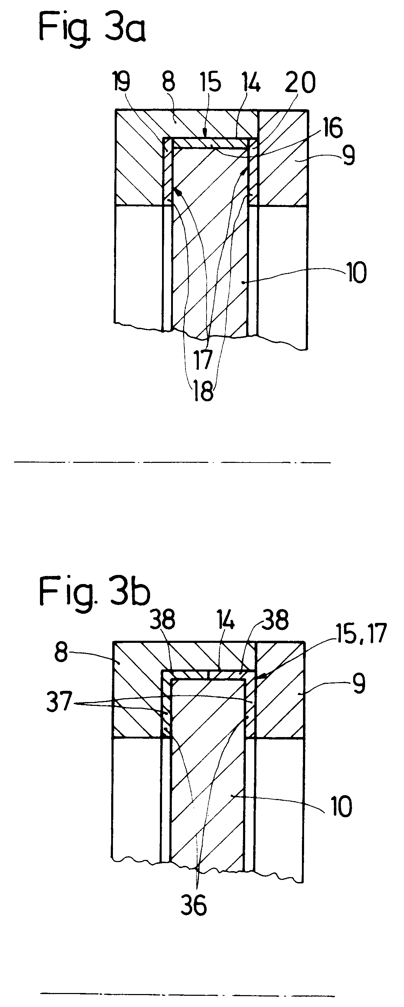

Für die Ausbildung der erfindungsgemäßen Lagerung sind weitere, in den Fig. 3a bis 3e gezeigte Ausführungen möglich, um die Nabe 10 gegen axiale Kräfte, die beim Ein- oder Ausrücken der Kupplung sowie während des Betriebs anliegen, abzustützen.

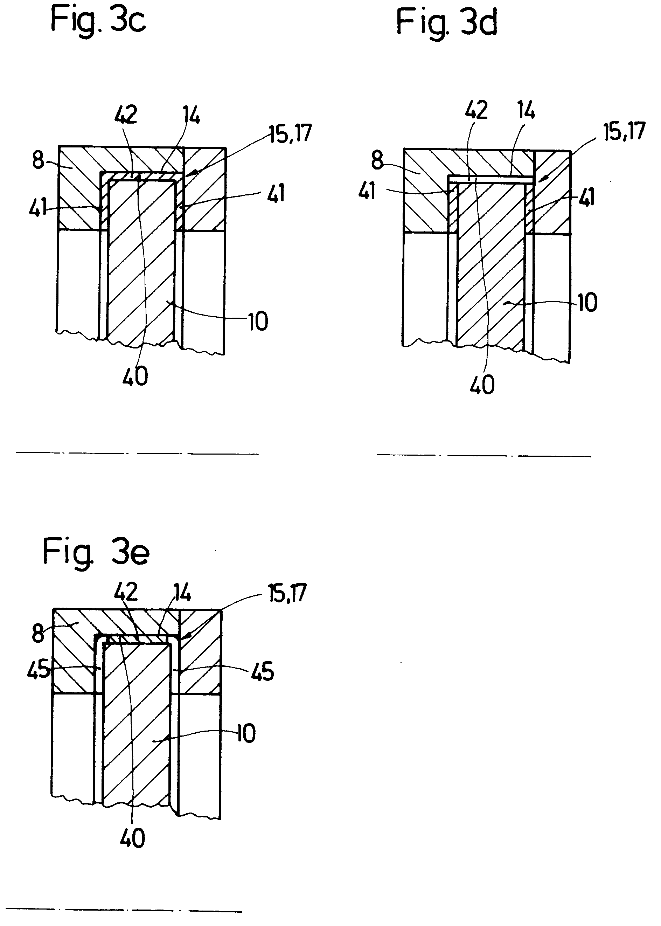

In Fig. 3a ist eine Ausführung gezeigt, bei der die als Wegbegrenzungen 18 für die Nabe 10 wirksamen Scheiben 19,20 bis an den Innenrand des Primärträgers 8 ragen und zu beiden Seiten des Ringes 16 des Radiallagers 15 anliegen. Die Ausführung gemäß Fig. 3b weist zwei ringförmige Halbschalen 36 L-förmigen Querschnitts auf, bei denen je ein zu der Nabe 10 paralleler Schenkel 37 die axiale Anlagefläche für die zugeordnete Seite der Nabe 10 bildet, während der jeweilige hierzu senkrechte Schenkel 38 zur radialen Führung der Nabe dient. Fig. 3c zeigt eine Lagerschale 40 U-förmigen Querschnitts, bei der beidseits der Nabe 10 angeordnete Schenkel 41 die axiale Führung der Nabe und ein mittiger Lagerteil 42 die radiale Führung übernehmen.
Dieser mittige Lagerteil kann gemäß Fig. 3d zur besseren Anpaßbarkeit an die Innenseite des Primärträgers 8 durch parallel zu den Drehachsen der Schwungräder 3,12 verlaufende Ausnehmungen unterbrochen sein. In Fig. 3e ist eine Ausführung der Lagerung dargestellt, bei der im Gegensatz zur Ausführung gemäß Fig. 3c die zu den entsprechenden Nabenseiten parallelen Schenkel in radialer Richtung verlaufende Unterbrechungen aufweisen, wodurch Laschen 45 gebildet werden. Diese Ausführung paßt sich der Innenseite des Primärschwungrades 3 ebenfalls besonders gut an. Ebenso können, wie nicht dargestellt, statt einer die Nabe 10 axial bzw. radial umgreifenden Lagerung Segmente von einem der zuvor beschriebenen Lagerelemente zwischen dem ersten Schwungrad 3 und der Nabe 10 vorgesehen sein, wobei die Segmente wahlweise an der Innenseite des Schwungrades 3 oder an der Nabe in deren Umfangsbereich befestigt sein können.

## Patentansprüche

1. Geteilte Schwungradvorrichtung, die ein mit der Kurbelwelle einer Brennkraftmaschine verbundenes, mit einer Axiallagerung für eine Nabe versehenes und im Umfangsbereich mit einem Radiallager für die Nabe ausgebildetes erstes Schwungrad sowie ein synchron mit der Nabe drehbares, gegenüber dem ersten Schwungrad zu einer begrenzten Relativdrehung befähigtes zweites Schwungrad aufweist, dadurch gekennzeichnet, daß das Axiallager (17) mit beidseits der Nabe (10) bis an das Radiallager (15) heranreichenden Wegbegrenzungen (18) für die Nabe (10) versehen ist.

2. Geteilte Schwungradvorrichtung nach Anspruch 1 mit einer Primärplatte an der einen Nabenseite, einer Deckplatte an der anderen Nabenseite und einem die Primärplatte mit der Deckplatte verbindenden, die beiden Platten ringförmig umgebenden Primärträger, dadurch gekennzeichnet, daß der Primärträger (8) an seiner der Nabe (10) zugewandten Innenseite sowohl das Radiallager (15) als auch das Axiallager (17) aufnimmt.

3. Geteilte Schwungradvorrichtung nach Anspruch 1 und 2, dadurch gekennzeichnet, daß die Wegbegrenzungen (18) des Axiallagers (17) im radial äußeren Randbereich der Nabe (10) an derselben angreift.

4. Geteilte Schwungradvorrichtung nach Anspruch 1 und 2 mit einem durch die Primärplatte, den Primärträger und die Deckplatte begrenzten, die Nabe umgebenden Fettraum, dadurch gekennzeichnet, daß das Axiallager (17) und das Radiallager (15) zumindest teilweise im Fettraum (33) angeordnet sind.

5. Geteilte Schwungradvorrichtung nach Anspruch 1, dadurch gekennzeichnet, daß die Wegbegrenzungen (18) des Axiallagers (17) durch jeweils eine Scheibe (19,20) gebildet werden, die am Radiallager (15) zentrierbar sind.

6. Geteilte Schwungradvorrichtung nach Anspruch 1, dadurch gekennzeichnet, daß die Wegbegrenzungen (18) durch je eine Scheibe (19,20) gebildet werden, die jeweils am Innenrand einer im Umfangsbereich des ersten Schwungrades (3) ausgebildeten umlaufenden Vertiefung (14) zentrierbar ist.

7. Geteilte Schwungradvorrichtung nach Anspruch 1, dadurch gekennzeichnet, daß das Axiallager (17) pro Nabenseite je eine zweischenklige Halbschale (36) aufweist, deren als Wegbegrenzung (18) wirksamer einer Schenkel (37) parallel zur Nabenseite verläuft und deren anderer Schenkel (38) die Nabe (10) umschließt.

8. Geteilte Schwungradvorrichtung nach Anspruch 1, dadurch gekennzeichnet, daß das Axiallager (17) einen zur radialen Aufnahme der Nabe (10) dienenden Lagerteil (42) aufweist, an dem beidseits der Nabe (10) als Wegbegrenzung (18) für diese jeweils ein Schenkel (41) angeformt ist.

9. Geteilte Schwungradvorrichtung nach Anspruch 1 und 8, dadurch gekennzeichnet, daß der Lagerteil (42) durch in axialer Richtung verlaufende Ausnehmungen unterbrochen ist.

10. Geteilte Schwungradvorrichtung nach den Ansprüchen 1, 7 und 8, dadurch gekennzeichnet, daß die Schenkel (37,41) durch jeweils radial zur Habenachse gerichtete Ausnehmungen unterbrochen sind.

11. Geteilte Schwungradvorrichtung nach Anspruch 1, dadurch gekennzeichnet, daß das Axiallager (17) an beiden Nabenseiten mit Segmenten zur Bildung der Anlagefläche für die Nabe (10) versehen ist.

12. Geteilte Schwungradvorrichtung nach Anspruch 1, dadurch gekennzeichnet, daß die Nabe (10) im Erstreckungsbereich des Axiallagers (17) Segmente zur Bildung einer Kontaktfläche aufweist.
